Europäisches Patentamt

European Patent Office

Office européen des brevets

(11) Publication number: **0 372 799**
**A2**

# EUROPEAN PATENT APPLICATION

(21) Application number: 89312369.5

(22) Date of filing: 28.11.89

(51) Int. Cl.⁵: **C08K 5/00, C08L 67/02,**
**//(C08K5/00,5:17,5:42),**
**(C08K5/00,5:09,5:42),**
**(C08K5/00,5:42,5:52)**

(30) Priority: 02.12.88 JP 305515/88

(43) Date of publication of application:
**13.06.90 Bulletin 90/24**

(84) Designated Contracting States:
**AT BE CH DE ES FR GB GR IT LI LU NL SE**

(71) Applicant: **POLYPLASTICS CO. LTD.**
**3-13, Azuchicho, 2-chome**
**Chuo-Ku Osaka-shi Osaka(JP)**

(72) Inventor: **Kitamura, Hiroshi**
**2272-2 Imaizumi**
**Fuji-shi Shizuoka(JP)**

(74) Representative: **Jackson, Peter et al**
**HYDE, HEIDE & O'DONNELL 146 Buckingham**
**Palace Road**
**London SW1W 9TR(GB)**

(54) **Thermoplastic polyester resin composition.**

(57) A thermoplastic polyester resin composition of improved antistatic properties comprises
   (A) a thermoplastic polyester resin,
   (B) 0.02 to 10 wt. %, based on the total amount of the composition, of a sulfonate-type anionic antistatic agent, and
   (C) 0.005 to 10 wt. %, based on the total amount of the composition, of one or more compounds selected from organophosphorus compound ($C_1$) and organic chelating agents ($C_2$).

EP 0 372 799 A2

# THERMOPLASTIC POLYESTER RESIN COMPOSITION

The present invention relates to a thermoplastic polyester resin composition usable in various fields in which antistatic properties are required, such as parts of precision instruments and electronic and electric appliances. In particular, the present invention relates to a thermoplastic polyester resin composition having excellent antistatic properties and a high resistance to thermal decomposition.

[Prior Art]

Among engineering plastics, thermoplastic polyester resins are widely chosen because of their well-balanced mechanical and physical properties on an industrial scale. Further they are used as starting materials for parts of precision instruments and electronic and electric components. The incorporation of a antistatic agent in these parts is indispensable for preventing problems, such as those from electrostatics, by protecting them from dust.

The antistatic agents used heretofore for thermoplastic polyester resins include sulfonate-type anionic antistatic agents, particularly metal alkylsulfonates and metal alkyl-aromatic sulfonates.

However, thermoplastic polyester resins containing the conventional sulfonate-type anionic antistatic agents are problematic in that they decompose and their melt stability is impaired in the extrusion or molding step so that the resins are discolored and their properties such as mechanical strength are impaired. Additionally the resins undergo bubbling to reduce the bulk specific gravity in the kneading and extrusion step so that when the extruded strands are cooled With water in the pelletizing step, water is absorbed in the bubbles and thereby prolong the drying time, thus reducing the productivity.

After intensive investigations made for the purpose of producing a thermoplastic polyester resin composition having resistance to thermal decomposition and excellent antistatic properties by solving the above-described problems, the inventors have found that the incorporation of a combination of a sulfonate-type anionic antistatic agent with an organophosphorus compound and/or an organic chelating agent in the thermoplastic polyester resin is beneficial. The present invention has been completed on the basis of this finding.

Thus the present invention relates to a thermoplastic polyester resin composition comprising:

(A) a thermoplastic polyester resin,

(B) 0.02 to 10 wt. %, based on the total amount of the composition, of a sulfonate-type anionic antistatic agent, and

(C) 0.005 to 10 wt. %, based on the total amount of the composition, of one or more compounds selected from organophosphorus compound $(C_1)$ and organic chelating agents $(C_2)$.

The thermoplastic polyester (A) usable in the present invention is produced by polycondensation of a dicarboxylic acid compound with a dihydroxy compound, polycondensation of a hydroxy carboxylic acid compound or polycondensation of these three compounds. The effect of the present invention can be obtained with any of the homopolyesters and copolyesters.

The dicarboxylic acid compounds usable herein include, for example, known dicarboxylic acids such as terephthalic, isophthalic, naphthalenedicarboxylic, diphenyldicarboxylic, diphenyl ether dicarboxylic, diphenylethanedicarboxylic, cyclohexanedicarboxylic, adipic and sebacic acids as well as those substituted with an alkyl, alkoxy or halogen. Further the dicarboxylic acid compounds are usable in the form of an ester-forming derivative thereof, such as a lower alcohol ester, e.g. dimethyl ester. These compounds are used either singly or in combination of two or more of them.

The dihydroxy compounds include, for example, ethylene glycol, propylene glycol, butanediol, neopentyl glycol, butenediol, hydroquinone, resorcinol, dihydroxydiphenyl ether, cyclohexanediol and 2,2-bis (4-hydroxyphenyl) propane. Also polyoxyalkylene glycols and those substituted with an alkyl, alkoxy or halogen are usable. These compounds are used either singly or in the form of a mixture or two or more of them.

The hydroxy carboxylic acids include, for example, hydroxybenzoic, hydroxynaphthoic and diphenyleneoxycarboxylic acids as well as those substituted with an alkyl, alkoxy or halogen. Also ester-forming derivatives of these compounds are usable. These compounds are used either singly or in combination or two or more of them in the present invention.

All the thermoplastic polyesters formed by the polycondensation of the above-described compounds as the monomers can be used in the present invention. They can be used either singly or in the form of a mixture of two or more of them. The polyester resins which can be processed at about 200 to 300° C are preferably used in the present invention, since the decomposition of the resin by the sulfonate-type anionic antistatic agent (B) is accelerated as the temperature is elevated and the decomposition cannot be completely inhibited even with the organophosphorus compound or the organic chelating agent. Therefore, preferred based resins are polyalkylene terephthalates and their copolymers, particularly those mainly comprising polybutylene terephthalate or its copolymer. Particularly remarkable effects of the present invention can be obtained with them.

The composition comprises 80 to 99.975 wt. % of a thermoplastic polyester resin.

The sulfonate-type anionic antistatic agent (B) used in the present invention includes, for example, metal alkylsulfonates and metal alkyl-aromatic sulfonates.

The metal alkylsulfonates include, for example, alkali metal or alkaline earth metal aliphatic sulfonates in which the alkyl group has 1 to 35 carbon atoms, preferably 8 to 22 carbon atoms. The alkali metals include, for example, sodium and potassium and the alkaline earth metals include, for example, calcium, barium and magnesium.

The metal alkylsulfonates include, for example, sodium n-hexylsulfonate, sodium n-heptylsulfonate, sodium n-octylsulfonate, sodium n-nonylsulfonate, sodium n-decylsulfonat, sodium n-dodecylsulfonate, sodium n-tetradecylsulfonate, sodium n-hexadecylsulfonate, sodium n-heptadecylsulfonate and sodium n-octadecylsulfonate.

The metal alkyl-aromatic sulfonates include, for example, alkali metal or alkaline earth metal salts or sulfonic acids comprising 1 to 3 aromatic nuclei substituted with an alkyl group having 1 to 35, preferably 8 to 22, carbon atoms.

The alkali metals include, for example, sodium and potassium and the alkaline earth metals include, for example, calcium, barium and magnesium.

The aromatic sulfonic acids include, for example, benzenesulfonic, naphthalene-1-sulfonic, naphthalene-2, 6-disulfonic, diphenyl-4-sulfonic and diphenyul ether 4-sulfonic acids.

The metal alkyl-aromatic sulfonates include, for example, sodium hexylbenzenesulfonate, sodium nonylbenzenesulfonate, sodium nonylbenzenesulfonate and sodium dodecylbenzenesulfonate.

The sulfonate-type anionic antistatic agents can be used either singly or in the form of a mixture of two or more of them. When the amount of the antistatic agent is insufficient, no satisfactory antistatic effect can be exhibited and, on the contrary, when it is excessive, the thermal stability of the resin is seriously impaired. The amount is therefore, 0.02 to 10 wt. %, preferably 0.2 to 5 wt.%, based on the total amount of the composition.

The present invention is characterized in that one or more compounds selected from organophosphorus compounds (C₁) and organic chelating agents (C₂) are used as the component (C) in order to control undesirable effects of the sulfonate-type anionic antistatic agent on the polyester resin, such as acceleration of the decomposition of the resin to impair various properties of the resin, to cause bubbling of the resin caused by the decomposition gas and to cause the discoloration.

The organophosphorus compounds (C₁) usable in the present invention include known ones such as phosphoric esters, phosphorous esters and phosphonites, among which those containing a trivalent atom are preferred. The phosphorous esters such as triaryl phosphites, trialkyl phosphites and trialkylaryl phosphites are particularly preferred.

Examples of them include triphenyl phosphite, tridecyl phosphite, diphenyl mono (2-ethylhexyl) phosphite, diphenyl isodecyl phosphite, phenyl diisodecyl phosphite and tris (nonylphenyl) phosphite.

The organic chelating agents (C₂) used in the present invention are compounds having a polydentate ligand capable of combining with the metal ion to form a chelate compound. They include, for example, polyamino carboxylic acids, hydroxy carboxylic acids and condensed phosphoric salts.

Examples of them include ethylenediamine-tetraacetic, cyclohexanediaminetetraacetic ethylenediaminediacetic, nitrilotriacetic, hydroxyethylenediaminetriacetic, diethylenetriaminepedtaacetic, triethylenetetraminehexaacetic and hydroxyethyliminodiacetic acids, dihydroxyethylglycine, gluconic acid, tartaric acid and citric acid.

One or more compounds selected from the organophosphorus compounds (C₁) and organic chelating agents (C₂) are used as the component (C) in the present invention. The amount of the component (C) is 0.005 to 10 wt.% based on the total amount of the composition. When the amount of the component (C) is less than 0.005 wt.%, the adverse effect of the sulfonate-type anionic antistatic agent (B) on the polyester resin is scarcely inhibited and therefore, problems such as impairment of the properties, bubbling or discoloration occur. On the contrary, when it exceeds 10 wt. %, impairment of the properties or discoloration by the component (C) become significant.

The preferred amount of the component (C) is 0.05 to 5 wt.%.

The weight ratio of the component (C) to the antistatic agent (B) is preferably 3/100 to 100/100,

3

particularly 5/100 to 50/100.

When the organophosphorus compound (C₁) and/or the organic chelating agent (C₂) is incorporated in the thermoplastic polyester resin, the decomposition, bubbling, discoloration, etc. of the resin by the anionic antistatic agent at a high temperature can be inhibited and impairment of the mechanical properties and various other properties due to the deterioration in a heating/melting step in the extrusion molding process can be inhibited.

Thus the composition comprising (A) the thermoplastic polyester resin, (B) the sulfonate type anionic antistatic agent and (C) the organophosphorus compound (C₁) and/or organic chelating agent (C₂) as indispensable components and having excellent antistatic properties, thermal stability and moldability can be obtained according to the present invention. Since, however, excellent flame retardancy, mechanical properties, thermal resistance, dimensional stability (resistance to deformation and warpage) are required of the thermoplastic polyester resin in many cases depending on the use thereof, it is often preferred, to incorporate a flame retardant and/or organic filler depending on the use of the resin.

The flame retardant usable for the above described purpose may be any flame retardant ordinarily used for the thermoplastic polyester. Usually an organohalogen compound is used. Particularly aromatic bromine compounds are preferred. They include, for example, low molecular weight bromine compounds such as penta- to decabrominated diphenyl ether; brominated aromatic carbonates derived from bisphenol A; brominated monomeric epoxy compounds and polymers thereof; brominated polystyrene oligomers; and brominated cyanuric esters.

The flame retardants can be used either singly or in the form of a mixture of two or more of them. The amount of the flame retardant is preferably as small as possible, since when it is large, the mechanical properties of the composition are impaired. It is usually 0 to 25 wt. %, particularly preferably 2 to 20 wt. %, based on the total amount of the composition. The flame retardant is preferably used in combination with a flame retardant assistant in the present invention.

The flame retardant assistants usable herein include metal oxides and hydroxides such as antimony trioxide, antimony halides, aluminum hydroxide and magnesium hydroxide. The amount of the flame retardant assistant is 0 to 15 wt. %, preferably 1 to 10 wt. %, based on the total amount of the composition.

The inorganic fillers are fibrous, powdery, granular and platy fillers which can be selected suitably depending on the use.

The fibrous fillers include inorganic fibrous fillers such as fibers of glass, asbestos, carbon, silica, silica/alumina, zirconia, boron nitride, silicon nitride, boron and potassium titanate, and those of metals such as stainless steel, aluminum, titanium, copper and brass. Typical fibrous fillers are glass and carbon fibers. Further high-melting organic fibrous materials such as polyamide, fluororesin and acrylic resin are usable like the inorganic fibrous fillers.

The powdery or granular fillers include, for example, carbon black; silica; quartz powder; glass beads; glass powder; silicates such as calcium silicate, aluminum silicate, kaolin, talc, clay, diatomaceous earth and wollastonite; metal oxides such as iron oxides, titanium oxides, zinc oxides and alumina; metal carbonates such as calcium carbonate and magnesium carbonate; metal sulfates such as calcium sulfate and barium sulfate; silicon carbide; silicon nitride; boron nitride; and metal powders.

The platy fillers include, for example, mica, glass flakes and various metal foils.

The inorganic fillers can be used either singly or in combination of two or more of them. A combination of the fibrous filler, particularly glass or carbon fibers, with a granular and/or platy filler is preferred from the viewpoints of the mechanical strength, dimensional accuracy and electrical properties.

It is desirable to use the filler in combination with a sizing agent or a surface-treating agent, if necessary. They include functional compounds such as epoxy, isocyanate, silane and titanate compounds. They are used for the preliminary surface treatment or sizing treatment or they are added to the starting materials in the production of the materials.

The amount of the inorganic filler used is 0 to 65 wt. %. It is suitably determined in this range depending on the use or the kinds of the additives. For example, when the mechanical strengths (particularly rigidity or the like) are to be improved, the inorganic filler is used in an amount of preferably 5 to 65 wt. %, particularly 10 to 60 wt. %. When the amount of the inorganic filler is sufficient, the mechanical strengths are a little poor and, on the contrary, when it is excessive, the molding operation becomes difficult and the mechanical strengths of the moldings are unsatisfactory.

It is preferred in the present invention to add a polyolefin wax to the composition in order to improve the moldability or releasability. In particular, an oxidized polyolefin wax, i.e. a modified polyolefin wax produced by thermally decomposing a polyolefin in an oxidizing atmosphere or by introducing a polar group of, for example, a carboxylic acid thereinto in the polymerization step is preferred, since it is effective. in controlling an adverse effect of the sulfonate-type anionic antistatic agent (component B) on the polyester

4

resin in addition to the above-described effect.

Examples of them include modified polyethylene, modified propylene and those produced by modifying ethylene copolymers such as ethylene/propylene, ethylene/vinyl acetate, ethylene/acrylic ester and ethylene/acrylic acid copolymers in the above-described manner. Among them, the modified (oxidized) polyethylene wax is particularly preferred.

The amount of the modified (oxidized) polyolefin wax is preferably 3 to 200 parts by weight, particularly 5 to 60 parts by weight, for 100 parts by weight of the antistatic agent.

The composition of the present invention can also comprise a small amount of other auxiliary thermoplastic resins in addition to the above-described components depending on the use thereof. They include, for example, polyethylene, ethylene copolymers such as ethylene/vinyl acetate copolymer and ethylene/alkyl acrylate copolymers, polypropylene, polyurethane, polyamide, polycarbonate, polyphenylene sulfide, polyphenylene oxide, polyacetal, polysulfone, polyether sulfone, polyether imide, polyether ketone and fluororesin. These thermoplastic resins can be used either singly or in the form of a mixture of two or more of them.

The composition of the present invention may further contain known substances usually added to thermoplastic and thermosetting resins, such as stabilizers e.g. antioxidants and ultraviolet absorbers, flame retardants, colorants, e.g. dyes and pigments, lubricants, crystallization accelerators and nucleating agents depending on the performance required of the composition.

The polyester resin composition of the present invention can be produced by a process and with an apparatus usually employed and used for the production of synthetic resin compositions. In particular, the necessary components are mixed together, and the mixture is kneaded and extruded with a single- of double-screw extruder to form pellets. Part of the necessary components are mixed to form a master batch to be used in the molding step. In another process, part or the whole of the resin components are pulverized and mixed together and the mixture is molten and extruded.

The polyester resin composition of the present invention has excellent anti static properties and an improved resistance to thermal decomposition. Its mechanical properties are not impaired in the extrusion and molding steps. It undergoes neither bubbling nor discoloration in the course of the production thereof and, therefore, it is free from problems caused by the bubbling or discoloration. Therefore, the composition can be molded with a hot runner which causes a severe thermal hysteresis. Thus the moldings have excellent antistatic properties, they are free from the electrostatic absorption of dusts and also from impairment of the mechanical properties and other properties which is caused by an antistatic agent. Thus the composition is quite suitable for use as a starting material for the parts of precision instruments and components of electronic and electric appliances which are to be produced by molding.

[Examples]

The following Examples will further illustrate the present invention, which by no means limit the invention. In the following Examples, the properties were determined as follows:

Extrudability

The extrudability was synthetically evaluated from the shape of the extruded strands, and the bulk specific gravity and water content of the formed pellets.

Half life of static charge

Test pieces (70 x 50 x 3mm) were left to stand at a temperature of $23°C$ and a relative humidity of 50% for two days and then the half life static charge of them was determined with Static Honestometer (tradename) at 6 kV for 1 min.

Tensile strength retention

The temperature of the cylinder of the molding machine was adjusted to $260°C$ and the resin was allowed to remain at the tip of the screw for 30 min. Then the resin was molded into test pieces and the tensile strength of them was determined. The retention was determined by comparison with the tensile strength (100) of test pieces produced without allowing the resin to remain at the tip of the screw.

Examples 1 to 10 and Comparative Examples 1 to 6

Polybutylene terephthalate resin (trade name: Duranex; a product of Polyplastics 60., Ltd.) as the component (A) was mixed with a sulfonate-type anionic antistatic agent (component B) selected from sodium alkylsulfonates (the alkyl group having chiefly 12 carbon atoms) and sodium alkylbenzene-sulfonates (the alkyl group having chiefly 12 carbon atoms), triphenyl phosphite or ethylene-diaminetetraacetic acid as the component (C) and, if necessary, additives such as a flame retardant, antimony trioxide and glass fibers as shown in Tables 1 and 2 with a ribbon blender. The mixture was melted, kneaded and pelletized in a 30 mm double-screw extruder to evaluate the extrudability of the resin. Then the pellets were molded into test pieces with an injection molding machine and the half life of static charge and the tensile strength retention of the test pieces were determined.

For comparison, similar samples were produced without using triphenyl phosphite or ethylenediaminetetraacetic acid and the properties of them were examined.

The results are shown in Table 1 and 2.

Table 1

| | Component / property | Unit | Ex. 1 | Ex. 2 | Ex. 3 | Comp. Ex. 1 | Comp. Ex. 2 |
|---|---|---|---|---|---|---|---|
| Component | Polybutylene terephthalate | wt% | 97.7 | 97.7 | 97.8 | 98.0 | 98.0 |
| | Sodium alkylsulfonate | wt% | 2.0 | — | 2.0 | 2.0 | — |
| | Sodium alkyl-aromatic sulfonate | wt% | — | 2.0 | — | — | 2.0 |
| | Triphenyl phosphite | wt% | 0.3 | 0.3 | — | — | — |
| | Ethylenediaminetetraacetic acid | wt% | — | — | 0.2 | — | — |
| Property | Extrudability | | good | good | good | bubbling | bubbling |
| | Half-life of static charge | sec | 1 | 5 | 1 | 1 | 5 |
| | Tensile strength retention | % | 88 | 82 | 87 | 73 | 57 |

Table 2

| | Component/property | Unit | Ex. 4 | Ex. 5 | Ex. 6 | Ex. 7 | Comp.Ex. 3 | Comp.Ex. 4 | Ex. 8 | Ex.9 | Ex. 10 | Comp.Ex. 5 | Comp. Ex. 6 |
|---|---|---|---|---|---|---|---|---|---|---|---|---|---|
| Component | Polybutylene terephthalate | wt% | 66.75 | 66.75 | 66.9 | 66.9 | 67.0 | 67.0 | 64.5 | 64.2 | 64.7 | 65.0 | 65.0 |
| | Sodium alkylsulfonate | " | 1.0 | — | 1.0 | 1.0 | 1.0 | — | 3.0 | — | 3.0 | 3.0 | — |
| | Sodium alkyl-aromatic sulfonate | " | — | 1.0 | — | — | — | 1.0 | — | 3.0 | — | — | 3.0 |
| | Triphenyl phosphite | " | 0.25 | 0.25 | 0.1 | — | — | — | 0.5 | 0.8 | — | — | — |
| | Ethylenediaminete-traacetic acid | " | — | — | — | 0.1 | — | — | — | — | 0.3 | — | — |
| | Flame retardant | " | 7.0 | 7.0 | 7.0 | 7.0 | 7.0 | 7.0 | 7.0 | 7.0 | 7.0 | 7.0 | 7.0 |
| | Antimony trioxide | " | 5.0 | 5.0 | 5.0 | 5.0 | 5.0 | 5.0 | 5.0 | 5.0 | 5.0 | 5.0 | 5.0 |
| | Glass fibers | " | 20.0 | 20.0 | 20.0 | 20.0 | 20.0 | 20.0 | 20.0 | 20.0 | 20.0 | 20.0 | 20.0 |
| Property | Extrudability | | good | good | good | good | bubbling | bubbling | good | good | good | bubbling | vigorous bubbling |
| | Half-life of static charge | sec | 5 | 60 | 5 | 5 | 5 | 70 | | 5 | | | 5 |
| | Tensile strength retention | % | 95 | 88 | 93 | 95 | 80 | 70 | 92 | 86 | 96 | 76 | 54 |

EP 0 372 799 A2

**Claims**

1. A thermoplastic polyester resin composition comprising:

(A) a thermoplastic polyester resin,

(B) 0.02 to 10 wt. %, based on the total amount of the composition, of a sulfonate-type anionic antistatic agent, and

(C) 0.005 to 10 wt. %, based on the total amount of the composition, of one or more compounds selected from organophosphorus compound ($C_1$) and organic chelating agents ($C_2$).

2. A thermoplastic polyester resin composition according to claim 1, wherein the sulfonate-type anionic antistatic agent (B) is one or more compounds selected from metal alkylsulfonates and metal alkyl-aromatic sulfonates.

3. A thermoplastic polyester resin composition according to claim 1 or claim 2, wherein the amount of the sulfonate-type antistatic agent (B) is 0.2 to 5 wt % , based on the total amount of the composition.

4. A thermoplastic polyester resin composition according to any preceding claim, wherein the organophosphoros compounds ($C_1$) are phosphorous esters.

5. A thermoplastic polyester resin composition according to any preceding claim, wherein the amount of the component (C) is 0.05 to 5 wt %, based on the total weight of the composition.

6. A thermoplastic polyester resin composition according to any preceding claim, wherein the thermoplastic polyester resin (A) is mainly a polybutylene terephthalate resin.

7. A thermoplastic polyester resin composition according to any preceding claim, which further contains a flame retardant and/or an inorganic filler.

8. A thermoplastic polyester resin composition according to any preceding claim, which further contains a polyolefin wax.

9. A thermoplastic polyester resin composition according to any preceding claim, wherein the weight ratio of (C) to (B) is in the range of 3/100 to 100/100.

10. A thermoplastic polyester resin composition according to claim 9, wherein the weight ratio of (C) to (B) is in the range of 5/100 to 50/100.